# EUROPEAN PATENT APPLICATION

(11) **EP 4 836 082 A1**
(43) Date of publication of application: **04.11.2026**
(21) Application number: 24910632.9
(22) Date of filing: 06.12.2024
(51) Int. Cl.: H01M 10/613

(54) **BATTERY ASSEMBLY AND ELECTRICAL SYSTEM**

(30) Priority: 29.12.2023 CN 202311871144; 29.01.2024 CN 202410128727
(71) Applicant: BYD Company Limited, Shenzhen, Guangdong 518118 (CN)
(72) Inventor: XIANG, Ying, Shenzhen, Guangdong 518118 (CN); CAI, Yaomin, Shenzhen, Guangdong 518118 (CN); WANG, Qiang, Shenzhen, Guangdong 518118 (CN); PENG, Qingbo, Shenzhen, Guangdong 518118 (CN); LU, Zhipei, Shenzhen, Guangdong 518118 (CN)
(74) Representative: Taor, Simon Edward William
(86) International application number: PCT/CN2024/137393
(87) International publication number: WO 2025/139700

(57) **Abstract**

An electrical system, provided with a battery assembly. The battery assembly comprises a plurality of battery cells (2); a heat absorption unit (1) is arranged between every two adjacent battery cells (2); and each heat absorption unit (1) comprises a heat absorption material (12) and at least one framework (11), the framework (11) being provided with a plurality of holes (13) penetrating in the thickness direction of the framework (11), and the heat absorption material (12) filling the holes (13). The battery assembly meets formula (I).

## Description

### CROSS-REFERNCE TO RELATED APPLICATION

This application claims priority to Chinese Patent Application No. 202410128727.1, filed on January 29, 2024, and entitled "BATTERY ASSEMBLY AND POWER CONSUMPTION SYSTEM", which is incorporated herein by reference in its entirety.

This application also claims priority to Chinese Patent Application No. 202311871144.X, filed on December 29, 2023, and entitled "BATTERY ASSEMBLY AND POWER CONSUMPTION SYSTEM", which is incorporated herein by reference in its entirety.

### TECHNICAL FIELD

This application relates to the field of battery technologies, and in particular, to a battery assembly and a power consumption system.

### BACKGROUND

Thermal abuse, mechanical abuse, and the like of batteries may bring safety hazards to the batteries and even trigger thermal runaway of cells. In related technologies, when thermal runaway occurs in a cell in a battery pack, a large amount of heat is generated inside the cell, resulting in a rapid rise in a temperature of the cell and transfer of heat to adjacent cells. If effective isolation measures are not taken, the temperature of the adjacent cells will rise rapidly, leading to thermal propagation.

### SUMMARY

An objective of the present invention is to provide a battery assembly and a power consumption system. The present invention proposes a parametric design method for a skeleton based on a Young's modulus. A cell gap and pressure are given to determine a selection range of skeleton thickness-related parameters, so that the battery assembly has good safety while meeting functional requirements.

To achieve the foregoing objectives, an aspect of the present invention provides a battery assembly. The battery assembly includes a plurality of cells. A heat-absorbing unit is disposed between two adjacent cells. The heat-absorbing unit includes a heat-absorbing material and at least one layer of skeleton. The skeleton having a plurality of holes penetrating in a thickness direction of the skeleton. The heat-absorbing material fills the hole. The battery assembly meets the following condition: $10 \leq \frac{1000 \left(x-d\right) {aE}_{1} S}{{nF}_{1} {x}_{1}} \leq 1000$
where x is a thickness of the heat-absorbing unit, in mm;
d is a gap between two adjacent cells, in mm;
a is a ratio of an area of an orthographic projection of the skeleton onto a surface of the heat-absorbing unit in contact with the cell to an area of the surface of the heat-absorbing unit in contact with the cell;
E₁ is a Young's modulus of the skeleton, in GPa;
S is the area of the surface of the heat-absorbing unit in contact with the cell, in mm²;
F₁ is pressure borne by the skeleton, in N;
x₁ is a thickness of one layer of the skeleton, in mm; and
n is a quantity of layers of the skeleton, n≥1, and n is an integer.

Preferably, energy Q of the cell ranges from 576 to 3456 kJ.

Preferably, a volume V of the heat-absorbing material ranges from 20000 to 300000 mm³. The volume V of the heat-absorbing material satisfies: V=(x-a*n*x₁)S.

Preferably, the thickness x of the heat-absorbing unit ranges from 0.5 to 5 mm.

Preferably, the gap d between two adjacent cells ranges from 0.3 to 3 mm.

Preferably, the ratio a of the area of the orthographic projection of the skeleton onto the surface of the heat-absorbing unit in contact with the cell to the area of the surface of the heat-absorbing unit in contact with the cell ranges from 10% to 50%.

Preferably, the Young's modulus E₁ of the skeleton ranges from 0.0001 to 100 GPa.

Preferably, the area S of the surface of the heat-absorbing unit in contact with the cell ranges from 5000 to 300000 mm².

Preferably, the pressure F₁ borne by the skeleton ranges from 5000 to 60000 N.

Preferably, the pressure F₁ borne by the skeleton satisfies the following formula: ${F}_{1} = F \frac{{E}_{1} a}{{E}_{2} \left(1-a\right) + {E}_{1} a}$
where F is total pressure borne by the surface of the heat-absorbing unit in contact with the cell, in N;
E₂ is a Young's modulus of the heat-absorbing material, in GPa; and
a is the ratio of the area of the orthographic projection of the skeleton onto the surface of the heat-absorbing unit in contact with the cell to the area of the surface of the heat-absorbing unit in contact with the cell.

Preferably, the thickness x₁ of one layer of the skeleton ranges from 0.025 to 2 mm.

Preferably, the quantity of layers n of the skeleton ranges from 1 to 10.

Preferably, the thickness x of the heat-absorbing unit is greater than or equal to a product of the thickness x₁ of one layer of the skeleton and the quantity of layers n of the skeleton.

Preferably, a total thickness of the skeleton accounts for 1% to 100% of the thickness of the heat-absorbing unit, preferably 10% to 80%.

Preferably, the heat-absorbing unit further includes an encapsulation film for encapsulating the skeleton and the heat-absorbing material.

Preferably, the holes are evenly disposed in the thickness direction of the skeleton.

Preferably, the ratio of the area of the surface of the heat-absorbing unit in contact with the cell to an area of a surface of the cell in contact with the heat-absorbing unit is greater than or equal to 0.8 and less than or equal to 1.

Preferably, the battery assembly includes at least two cell groups. Cell group includes N cells that are arranged. The heat-absorbing unit is disposed between two adjacent cell groups. The thickness x of the heat-absorbing unit meets the following relationship: (0.5±b)mm≤x≤(5N±b)mm; where b is a preset correction factor in mm.

Preferably, a phase change temperature of the heat-absorbing material is between 50°C and 200°C.

Preferably, a phase change temperature of the heat-absorbing material is between 70°C and 160°C.

Preferably, the heat-absorbing material is a hydrogel.

Preferably, the plurality of holes are evenly disposed in an extension direction of the skeleton.

A second aspect of the present invention provides a power consumption system, including the battery assembly described above.

According to the technical solutions of the present invention, a value of $\frac{1000 \left(x-d\right) {aE}_{1} S}{{nF}_{1} {x}_{1}}$ of the battery assembly is greater than or equal to 10 and less than or equal to 1000, so that a deformation amount of a heat-absorbing unit within a specific range can be ensured, thereby ensuring that the heat-absorbing unit is not damaged or has material overflow due to squeezing during thermal runaway of a battery.

### BRIEF DESCRIPTION OF DRAWINGS

FIG. 1 is a diagram of a structure of a battery assembly;
FIG. 2 is a diagram of a heat-absorbing unit including a hexagonal skeleton;
FIG. 3 is a diagram of a surface of a hexagonal skeleton;
FIG. 4 is a diagram of a surface of a square skeleton;
FIG. 5 is a diagram of a double-layer square skeleton;
FIG. 6 is a diagram of a heat-absorbing unit including a single-layer skeleton;
FIG. 7 is a diagram of a heat-absorbing unit including a multi-layer skeleton; and
FIG. 8 is a thermal runaway pressure test apparatus.

### Descriptions of reference numerals:

1: heat-absorbing unit; 2: cell; 11: skeleton; 12: heat-absorbing material; 13: hole; 14: encapsulation film; 3: pressure sensor; 4: heat insulation board; 5: fixture baffle; 6: nail penetration point.

### DESCRIPTION OF EMBODIMENTS

The following describes specific implementations of the present invention is detail with reference to the accompanying drawings. It should be understood that the specific implementations described herein are merely used to describe and explain the present invention, and are not intended to limit the present invention.

In descriptions of this application, the terms "first" and "second" are merely intended for a purpose of description, and shall not be understood as an indication of relative importance or an implicit indication of a quantity of indicated technical features. Therefore, unless otherwise specified, a feature limited by "first" or "second" may explicitly or implicitly include one or more features, and "a plurality of" means two or more. The term "include" and any variations thereof means non-exclusive inclusion, which may present or add one or more other features, integers, steps, operations, units, components, and/or combinations thereof.

In addition, orientation or position relationship indicated by the terms such as "upper," "lower," "inner," and "outer" are based on orientation or position relationship shown in the accompanying drawings, and are used only for ease of describing this application and brevity of description, rather than indicating that the mentioned apparatus or elements must have a particular orientation or must be constructed and operated in a particular orientation. Therefore, such terms should not be construed as a limitation to this application.

Furthermore, unless otherwise explicitly specified and limited, the terms "mount", "interconnect", and "connect" should be understood in a broad sense. For example, the terms may indicate a fastening connection, a detachable connection, or an integral connection, may indicate a mechanical connection or an electrical connection, or may indicate a direct connection, an indirect connection through an intermediate medium, or an internal communication between two elements. A person of ordinary skill in the art may understand specific meanings of the foregoing terms in this application based on specific cases.

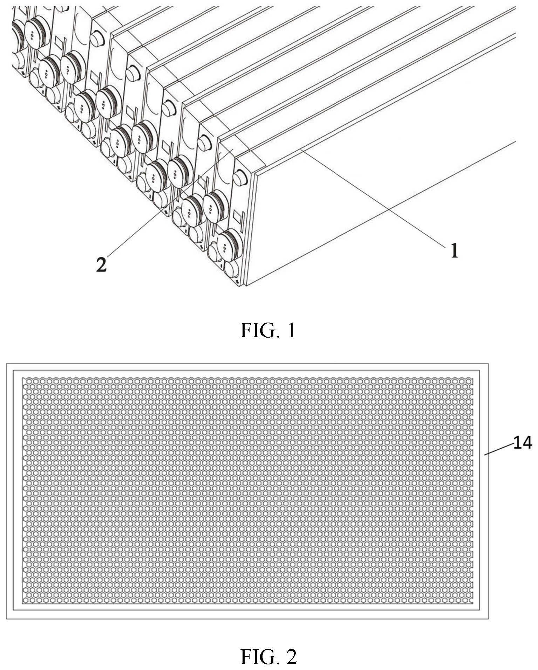

As shown in FIG. 1 to FIG. 7, a battery assembly of the present invention includes a plurality of cells 2. A heat-absorbing unit 1 is disposed on at least one surface of the cell 2. The heat-absorbing unit 1 includes a skeleton 11 and a heat-absorbing material 12. The skeleton 11 includes a plurality of holes 13 penetrating the skeleton 11 in a thickness direction of the skeleton 11. The heat-absorbing material 12 fills the hole 13. The skeleton 11 is of a single-layer or multi-layer structure.

In the present invention, the battery assembly meets the following condition: $10 \leq \frac{1000 \left(x-d\right) {aE}_{1} S}{{nF}_{1} {x}_{1}} \leq 1000$
where x is a thickness of the heat-absorbing unit 1, in mm;
d is a given gap between cells 2, in mm;
a is a ratio of an area of an orthographic projection of the skeleton 11 onto a surface of the heat-absorbing unit 1 in contact with the cell 2 to an area of the surface of the heat-absorbing unit 1 in contact with the cell 2;
E₁ is a Young's modulus of the skeleton 11, in GPa;
S is the area of the surface of the heat-absorbing unit 1 in contact with the cell 2, in mm²;
F₁ is pressure borne by the skeleton 11, in N;
x₁ is a thickness of one layer of the skeleton 11, in mm; and
n is a quantity of layers of the skeleton 11, n≥1, and n is an integer.

When the heat-absorbing unit 1 meets the above parameter conditions, the battery assembly has good safety. Specifically, in a safety test of the battery assembly, after nail penetration triggers thermal runaway in one cell 2, no thermal propagation occurs. When a value of $\frac{1000 \left(x-d\right) {aE}_{1} S}{{nF}_{1} {x}_{1}}$ of the battery assembly is less than 10, the skeleton 11 is prone to large deformation due to excessively low Young's modulus of the skeleton 11. Once the thermal runaway occurs in the cell 2, an expansion force increases sharply, causing the heat-absorbing material 12 to rupture encapsulation and leak, consequently reducing heat absorption and failing to suppress the thermal propagation. When the value of $\frac{1000 \left(x-d\right) {aE}_{1} S}{{nF}_{1} {x}_{1}}$ of the battery assembly is greater than 1000, the skeleton 11 has an extremely high Young's modulus and hardly deforms. Because a specific gap needs to be compressed during a design, this compression gap is provided by the heat-absorbing material 12. During charging/discharging cycles of the cell 2, the heat-absorbing unit 1 is repeatedly squeezed, causing the heat-absorbing material 12 to be continuously squeezed and to overflow from the gap between the cells 2, consequently reducing heat absorbed by the heat-absorbing unit 1 and failing to suppress the thermal propagation.

In a preferred implementation, the heat-absorbing unit 1 meets the following condition: $15 \leq \frac{1000 \left(x-d\right) {aE}_{1} S}{{nF}_{1} {x}_{1}} \leq 400$

In the foregoing preferred implementation, the battery assembly has further improved safety.

In the battery assembly of the present invention, preferably, the thickness x of the heat-absorbing unit 1 ranges from 0.5 to 5 mm, and more preferably from 0.5 to 2 mm. When the thickness of the heat-absorbing unit 1 is within the foregoing preferred range, it can be ensured that the battery assembly has good safety, and the battery assembly also has an appropriate energy density. In the present invention, the thickness of the heat-absorbing unit 1 may be measured using a vernier caliper, a laser rangefinder, or the like. In addition, in the present invention, the thickness of the heat-absorbing unit 1 is the thickness measured after the heat-absorbing unit 1 is removed from the battery assembly.

In the battery assembly of the present invention, the gap between the cells 2 is determined based on assembly clearance and an overall space utilization rate of a battery pack. Preferably, the gap d between the cells 2 ranges from 0.3 to 3 mm. The gap between the cells 2 may be directly measured by measuring a distance between opposite surfaces of two adjacent cells 2. The heat-absorbing unit 1 is disposed between the opposite surfaces of the two adjacent cells 2. Generally, the gap between the cell 2 is the distance between the opposite surfaces of the two adjacent cells 2, measured in a resting state when SOC of the cell 2 is 25%.

In the battery assembly of the present invention, preferably, the ratio a of the area of the orthographic projection of the skeleton 11 onto the surface of the heat-absorbing unit 1 in contact with the cell 2 to the area of the surface of the heat-absorbing unit 1 in contact with the cell 2 ranges from 10% to 50%. When the area ratio of the skeleton 11 on a surface of the heat-absorbing unit 1 is within the foregoing preferred range, the heat-absorbing unit 1 can provide sufficient support to ensure that the heat-absorbing material 12 is not squeezed out, and also ensure a heat absorption capacity of the heat-absorbing material 12, so that the battery assembly has good safety. When determining a, only the area of the orthographic projection of a solid structure of the skeleton 11 onto the surface of the heat-absorbing unit 1 in contact with the cell 2 is considered. In other words, an area of the hole 13 is not included in the area of the orthographic projection onto the surface of the heat-absorbing unit 1 in contact with the cell 2. Further, when a projection of the heat-absorbing unit 1 onto the surface of the cell 2 in contact with the heat-absorbing unit 1 is in a surface of the cell 2, the area of the orthogonal projection onto the surface of the heat-absorbing unit 1 in contact with the cell 2 is equal to an area of a surface of the skeleton 11 facing the heat-absorbing unit 1, and the area of the surface of the heat-absorbing unit 1 in contact with the cell 2 is an area of a surface of the heat-absorbing unit 1 facing the cell 2.

In the battery assembly of the present invention, preferably, the Young's modulus E₁ of the skeleton 11 ranges from 0.0001 to 100 GPa. When the Young's modulus of the skeleton 11 is within the foregoing preferred range, the skeleton 11 can provide sufficient support for the heat-absorbing material 12 to ensure that the heat-absorbing material 12 is not squeezed out, so that the battery assembly has good safety. The Young's modulus E₁ of the skeleton 11 may be determined based on a material of the skeleton 11.

In the battery assembly of the present invention, preferably, the area S of the surface of the heat-absorbing unit 1 in contact with the cell 2 ranges from 5000 to 300000 mm². When a heat absorption area on a surface of the heat-absorbing unit 1 is within the foregoing preferred range, it can be ensured that the heat-absorbing unit 1 can provide sufficient heat absorption capacity, thereby suppressing thermal propagation of a battery. Generally, the heat absorption area of the heat-absorbing unit 1 is an area of a surface of the heat-absorbing unit 1 that is attached to the cell 2, or may be an area of a surface of one cell 2 that is attached to the heat-absorbing unit 1.

In the battery assembly of the present invention, the pressure F₁ borne by the skeleton 11 is generally given based on an actual situation. If the pressure is too small, it cannot constrain and secure the heat-absorbing unit 1 and the cell 2. If the pressure is too large, it may damage the cell 2. Preferably, the pressure F₁ borne by the skeleton 11 ranges from 5000 to 60000 N.

More preferably, the pressure F₁ borne by the skeleton 11 satisfies the following formula: ${F}_{1} = F \frac{{E}_{1} a}{{E}_{2} \left(1-a\right) + {E}_{1} a}$
where F is total pressure borne by the surface of the heat-absorbing unit 1 in contact with the cell 2, in N;
E₂ is a Young's modulus of the heat-absorbing material 12, in GPa; and
a is the ratio of the area of the orthographic projection of the skeleton 11 onto the surface of the heat-absorbing unit 1 in contact with the cell 2 to the area of the surface of the heat-absorbing unit 1 in contact with the cell 2.

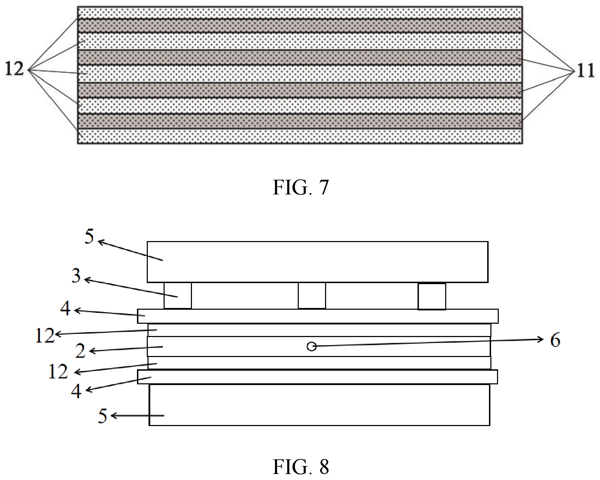

The total pressure F borne by the surface of heat-absorbing unit 1 is calculated through the following steps:
A top view of a test apparatus is shown in FIG. 8;
1. take one cell 2, and charge the cell 2 to a fully charged state using a standard charging procedure;
2. place the cell 2 in a test fixture shown in FIG. 8, with a large surface of the cell 2 thermally insulated and properly constrained by the heat-absorbing unit 1 and a heat insulation board 4, where the heat insulation board 4 may be selected as a calcium silicate board;
3. align pressure sensors 3 with a center of the large surface of the cell 2 and positions on positive and negative electrode sides of the large surface, and after assembling the entire fixture, maintain stability of the entire apparatus (that is, no shaking and no components falling off occur);
4. trigger thermal runaway of the cell 2 and detect a force condition fed back by the pressure sensors 3; and
5. sum the force condition obtained by the three pressure sensors 3 to obtain the total pressure on the surface of the heat-absorbing unit 1.

In the foregoing test method, in addition to disposing the three pressure sensors 3 at the foregoing positions, a plurality of pressure sensors 3 may alternatively be disposed. The total pressure F borne by the surface of the heat-absorbing unit 1 is determined based on a sum of pressures fed back by the plurality of pressure sensors 3.

Moreover, in the foregoing test method, a surface pressure sensor 3 may alternatively be used, that is, an entire piece of test film. The film is attached to the large surface of the cell 2 (the large surface of the cell 2 corresponds to a surface of the heat insulation board 4) to output the total pressure F borne by the surface of the heat-absorbing unit 1.

Furthermore, in the foregoing testing method, the pressure sensor 3 may also be zeroed after being placed between a fixture baffle 5 and the heat insulation board 4. Alternatively, the pressure sensor 3 may be placed between the fixture baffle 5 and the heat insulation board 4 to obtain a pressure value. The total pressure borne by the surface of the heat-absorbing unit 1 in contact with the cell 2 during the thermal runaway of the cell 2 may be determined based on a difference between a pressure value determined after the thermal runaway of the cell 2 and the foregoing pressure value.

In addition, in step 3, to further improve test accuracy, the test apparatus may simulate the force condition of the cell 2 inside the battery pack. That is, the test apparatus may be tightened by a pressure rod bolt to control a force applied to a battery to be consistent with that in the battery pack (controlled within a range of 0 to 10 kN, preferably between 1 and 6 kN).

The thermal runaway of the cell 2 may be triggered by the following two methods:
1. The thermal runaway of the cell 2 is triggered by nail penetration. A nail penetration position is at the middle of the cell 2, for example, a position of a nail penetration point 6 shown in FIG. 8. In addition, the nail penetration position may be at a positive electrode position and/or a negative electrode position corresponding to the cell 2.
2. Based on the apparatus shown in FIG. 8, a heating plate is disposed on the large surface of the cell 2 at a position corresponding to the positive electrode, negative electrode, or a middle position. Resistance of the heating plate is generally around 45 to 50Ω. The heating plate is heated to induce the thermal runaway of the cell 2.

In the battery assembly of the present invention, preferably, the thickness x₁ of one layer of the skeleton 11 ranges from 0.025 to 2 mm. When the thickness of one layer of the skeleton 11 is within the foregoing preferred range, the skeleton 11 can provide sufficient support for the heat-absorbing material 12, and it can also be ensured that the heat-absorbing material 12 in the heat-absorbing unit 1 can provide sufficient heat absorption capacity.

In the battery assembly of the present invention, a quantity of layers n of the skeleton 11 increases with a thickness of the heat-absorbing material 12. However, an excessive quantity of layers increases production difficulty, making it difficult for a material to meet a design requirement. Preferably, the quantity of layers n of the skeleton 11 ranges from 1 to 10, specifically, for example, 1, 2, 3, 4, 5, 6, 7, 8, 9, or 10. When the quantity of layers of the skeleton 11 is within the foregoing preferred range, the skeleton 11 can provide sufficient support for the heat-absorbing material 12, and it can also be ensured that the heat-absorbing unit 1 can provide sufficient heat absorption capacity, thereby suppressing thermal propagation of the battery.

In one embodiment of this application, the thickness x of the heat-absorbing unit 1 is greater than or equal to a product of the thickness x₁ of one layer of the skeleton 11 and the quantity of layers n of the skeleton 11. When the thickness of the heat-absorbing unit 1 and a total thickness of the skeleton 11 meet the foregoing range, a volume of the heat-absorbing material 12 can be further increased while ensuring a support function of the skeleton 11, to ensure that there is no problem of thermal propagation in the battery assembly, and to ensure the safety of the battery assembly.

In one embodiment of this application, the holes 13 are evenly disposed in the thickness direction of the skeleton 11. Specifically, the holes 13 are evenly disposed in the thickness direction of the skeleton 11, to facilitate processing and manufacturing of the skeleton 11, and further distribute the force on the skeleton 11 evenly, thereby improving mechanical properties of the skeleton 11. The even disposition means that cross sections of the holes 13 are all the same in the thickness direction of the skeleton 11, or orthographic projections of the holes 13 onto a plane perpendicular to the thickness direction of the skeleton 11 completely coincide with each other.

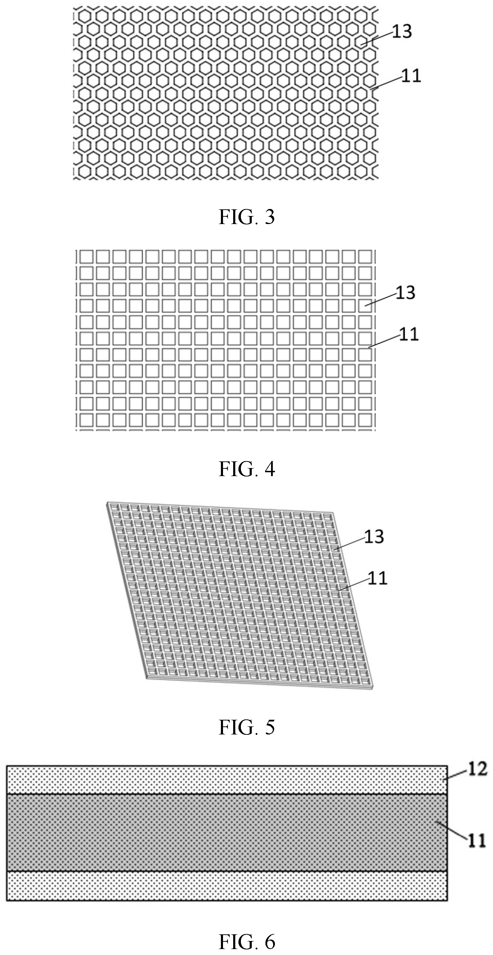

In addition, in one embodiment of this application, as shown in FIG. 3 and FIG. 4, the plurality of holes 13 are evenly disposed in an extension direction of the skeleton 11. Specifically, the foregoing even disposition means that a spacing between two adjacent holes 13 is the same, to ensure that the heat-absorbing material 12 is even at different positions on the surface of the heat-absorbing unit 1 in contact with the cell 2, thereby ensuring evenness of heat absorption of the heat-absorbing unit 1. Further, the skeleton 11 extends in two mutually perpendicular directions. The holes 13 are evenly disposed in the extension direction of the skeleton 11, meaning that the plurality of holes 13 are evenly disposed in at least one of the directions. The directions are perpendicular to the thickness direction of the skeleton 11, and the directions are also perpendicular to each other.

In one embodiment of this application, a ratio of the area of the surface of the heat-absorbing unit 1 in contact with the cell 2 to an area of a surface of the cell 2 in contact with the heat-absorbing unit 1 is greater than or equal to 0.8 and less than or equal to 1. A ratio between a contact area of the heat-absorbing unit 1 and a surface of an adjacent cell 2 is set, to ensure that the heat-absorbing unit 1 is in full contact with the surface of the cell 2, thereby ensuring heat absorption effect of the heat-absorbing unit 1.

In one embodiment of this application, the battery assembly includes at least two cell 2 groups. The cell 2 group includes N cells 2 that are arranged. The heat-absorbing unit 1 is disposed between two adjacent cell 2 groups. The thickness x of the heat-absorbing unit 1 meets the following relationship: (0.5±b)mm≤x≤(5N±b)mm, where b is a preset correction factor in mm. Specifically, as a quantity of cells 2 in the cell 2 group increases, the thickness of the heat-absorbing unit 1 is increased to ensure that the heat-absorbing unit 1 can fully absorb heat that may be released during thermal runaway in the cell 2 group, to ensure the safety of the battery assembly. b is a preset correction factor, which can be determined based on the design requirement of the battery assembly. Generally, a value of b is selected from values such as 0.1, 0.5, or 1, and the value of b increases with a battery capacity to ensure the heat absorption capacity of heat-absorbing unit 1.

In one embodiment of this application, because the heat-absorbing material 12 absorbs heat through phase change, when the heat-absorbing material 12 with a phase change temperature between 50°C and 200°C is used in the battery assembly, problems such as the phase change material overflow or damage caused by a large expansion force generated during thermal runaway of the battery may occur. In this case, heat generated by the cell 2 during the thermal runaway cannot be absorbed, resulting in the thermal propagation in the battery assembly. Therefore, the battery assembly satisfies $10 \leq \frac{1000 \left(x-d\right) {aE}_{1} S}{{nF}_{1} {x}_{1}} \leq 1000$, to ensure the heat absorption effect of the heat-absorbing unit 1.

In addition, when the phase change temperature of the phase change material is within this range, heat generated by the cell 2 in the battery assembly during charging and discharging can further be effectively absorbed, to cool the cell 2 and ensure normal use of the cell 2.

Further, to ensure that the heat-absorbing material 12 can prevent the thermal propagation in the battery assembly, the phase change temperature of the heat-absorbing material 12 is required to be between 70°C and 160°C. Specifically, when the phase change temperature of the heat-absorbing material 12 is within this temperature range, it can be ensured that the heat-absorbing material 12 does not undergo phase change during normal operation of the battery, to ensure an amount of heat-absorbing material 12 during the thermal runaway of the cell 2. In addition, it can also be ensured that the heat-absorbing material 12 can undergo full phase change after the thermal runaway occurs in the cell 2 in the battery assembly, to fully absorb the heat generated by the cell 2.

In one embodiment of this application, the heat-absorbing material 12 is a composite material including a liquid phase change medium. The heat absorption effect is achieved through phase change of this liquid phase change medium. The liquid phase change medium includes at least one of liquids such as water, ethanol, and ethylene glycol. In some implementations of this application, the heat-absorbing material 12 may be a hydrogel containing water, a hydrated salt, or a composite thereof. The phase change temperature of the heat-absorbing material 12 may be adjusted by regulating a water content in the heat-absorbing material 12. The composite may be a composite of a hydrogel or a hydrated salt with another material (for example, a flame retardant). The hydrogel is used as an example. A polymer material with a network structure may serve as a matrix of the hydrogel, and water may serve as the liquid phase change medium. In some other implementations of this application, the heat-absorbing material 12212 may be a material including liquids such as ethanol or ethylene glycol.

In the battery assembly of the present invention, the skeleton 11 include the plurality of holes 13 penetrating the skeleton 11 in the thickness direction of the skeleton 11, and the heat-absorbing material 12 fills the hole 13. A shape of the hole 13 of the skeleton 11 is not specially limited, and may be various conventional regular geometric shapes or irregular shapes, for example, square, hexagonal, or circular. In some implementations, as shown in FIG. 2 and FIG. 3, the hole 13 of the skeleton 11 is hexagonal (preferably regular hexagonal). In some other implementations, as shown in FIG. 4 and FIG. 5, the shape of the hole 13 of the skeleton 11 is square.

In the battery assembly of the present invention, the skeleton 11 is of a single-layer or multi-layer structure. When the skeleton 11 is the single-layer structure, as shown in FIG. 6, the heat-absorbing material 12 fills the hole 13 of the skeleton 11 while completely covering an upper surface and a lower surface of the skeleton 11. When the skeleton 11 is the multi-layer structure, as shown in FIG. 7, the heat-absorbing material 12 is filled between any two adjacent layers of the skeleton 11, and the heat-absorbing material 12 also covers an upper surface of an uppermost layer of the skeleton 11 and a lower surface of a lowermost layer of the skeleton 11.

In the battery assembly of the present invention, a material forming the skeleton 11 preferably has a property of withstanding a high temperature above 400°C. In some implementations, the material forming the skeleton 11 is polyester, polypropylene (PP), or a metal (for example, aluminum).

In the battery assembly of the present invention, the heat-absorbing material 12 may be a heat-absorbing material 12 conventionally used in the battery field. In some implementations, the heat-absorbing material 12 is a hydrogel material.

In the battery assembly of the present invention, preferably, the total thickness of the skeleton 11 accounts for 1% to 100% of the thickness of the heat-absorbing unit 1, more preferably 10% to 80%. When a percentage of the total thickness of the skeleton 11 to the thickness of the heat-absorbing unit 1 is within the foregoing range, it can be ensured that the heat-absorbing unit 1 can provide sufficient heat absorption capacity, thereby suppressing thermal propagation of the battery.

In the battery assembly of the present invention, the heat-absorbing unit 1 may further include an encapsulation film 14 for encapsulating the skeleton 11 and the heat-absorbing material 12.

In the battery assembly of the present invention, preferably, one heat-absorbing unit 1 is disposed every two cells 2 (as shown in FIG. 1). According to this preferred implementation, the battery assembly has good safety while meeting a heat absorption requirement. Specifically, in the safety test of the battery assembly, after nail penetration triggers thermal runaway in one cell 2, an obvious thermal propagation phenomenon occurs.

In this embodiment of the present invention, energy Q of the cell 2 generally ranges from 576 to 3456 kJ, a volume V of the heat-absorbing material 12 should range from 20000 to 300000 mm³, to ensure that there is sufficient heat-absorbing material 12 to absorb heat released by the cell 2, and ensure that a volumetric energy density reduction rate of the battery assembly is within a specified range, thereby improving an integration level and energy density of the battery assembly. The volume of the heat-absorbing material 12 is V=(x-a*n*x₁)S.

The present invention further provides a power consumption system, including the battery assembly described above. The power consumption system may be, for example, a vehicle or an energy storage system. Because the power consumption system is equipped with the battery assembly of the present invention, the battery assembly in the power consumption system has good safety while meeting a heat absorption requirement.

The following embodiments further describe a heat-absorbing unit 1 and the power consumption system according to the present invention. The embodiments are implemented based on the technical solutions of the present invention, and detailed implementations and specific operation processes are provided. However, the protection scope of the present invention is not limited to the following embodiments.

Unless otherwise specified, the experimental methods in the following embodiments are all conventional methods in the art. Unless otherwise specified, all experimental materials used in the following embodiments are all commercially available.

Embodiments 1 to 31 and Comparative examples 1 to 7

The battery assembly shown in FIG. 1 is configured, including a plurality of cells 2 and the heat-absorbing unit 1. One heat-absorbing unit 1 is arranged every two cells 2. The heat-absorbing unit 1 includes a skeleton 11 and a heat-absorbing material 12. The heat-absorbing material 12 is a hydrogel. The skeleton 11 is of a single-layer or multi-layer structure. Each layer of the skeleton 11 includes several holes 13 penetrating the skeleton 11 in a thickness direction of the skeleton 11. The hydrogel fills the hole 13. The skeleton 11 and the heat-absorbing material 12 are encapsulated in an encapsulation film 14 (an aluminum-plastic film). The following table 1 shows a thickness x of the heat-absorbing unit 1, a gap d between the cells 2, an area ratio a of the skeleton 11 on a surface of the heat-absorbing unit 1, a Young's modulus E₁ of the skeleton 11, a heat-absorbing area S of the surface of the heat-absorbing unit 1, pressure F₁ borne by the skeleton 11, a thickness x₁ of one layer of the skeleton 11, and a quantity of layers n of the skeleton 11 in each battery pack example.

**Table 1**

| | x (mm) | d (mm) | a | E₁ (GPa) | S (mm²) | F₁ (N) | x₁ (mm) | n | Total thickness of the skeleton 11 | $\frac{1000 \left(x-d\right) {aE}_{1} S}{{nF}_{1} {x}_{1}}$ |
|---|---|---|---|---|---|---|---|---|---|---|
| Embodiment 1 | 0.5 | 0.40 | 0.15 | 0.3 | 47790 | 45000.0 | 0.40 | 1.00 | 0.40 | 11.948 |
| Embodiment 2 | 0.5 | 0.40 | 0.10 | 1.5 | 47790 | 30000.0 | 0.20 | 4.00 | 0.80 | 29.869 |
| Embodiment 3 | 0.4 | 0.15 | 0.15 | 0.3 | 47790 | 45000.0 | 0.40 | 1.00 | 0.40 | 29.869 |
| Embodiment 4 | 0.1 | 0.03 | 0.15 | 0.3 | 47790 | 45000.0 | 0.10 | 1.00 | 0.10 | 33.453 |
| Embodiment 5 | 0.6 | 0.40 | 0.10 | 1.5 | 65762 | 30000.0 | 0.50 | 3.00 | 1.50 | 43.841 |
| Embodiment 6 | 0.5 | 0.40 | 0.30 | 0.3 | 47790 | 45000.0 | 0.10 | 2.00 | 0.20 | 47.790 |
| Embodiment 7 | 0.5 | 0.40 | 0.10 | 1.5 | 47790 | 30000.0 | 0.25 | 2.00 | 0.50 | 47.790 |
| Embodiment 8 | 0.5 | 0.40 | 0.10 | 1.5 | 47790 | 30000.0 | 0.40 | 1.00 | 0.40 | 59.738 |
| Embodiment 9 | 1.0 | 0.40 | 0.15 | 0.3 | 47790 | 45000.0 | 0.40 | 1.00 | 0.40 | 71.685 |
| Embodiment 10 | 0.5 | 0.30 | 0.10 | 1.5 | 47790 | 60000.0 | 0.25 | 1.00 | 0.25 | 95.580 |
| Embodiment 11 | 0.6 | 0.40 | 0.10 | 1.5 | 65762 | 30000.0 | 0.25 | 2.00 | 0.50 | 131.524 |
| Embodiment 12 | 0.5 | 0.30 | 0.30 | 0.3 | 47790 | 45000.0 | 0.10 | 1.00 | 0.10 | 191.160 |
| Embodiment 13 | 0.4 | 0.20 | 0.30 | 0.3 | 47790 | 45000.0 | 0.10 | 1.00 | 0.10 | 191.160 |
| Embodiment 14 | 0.6 | 0.40 | 0.10 | 1.5 | 65762 | 30000.0 | 0.03 | 10.0 0 | 0.30 | 219.207 |
| Embodiment 15 | 0.5 | 0.40 | 0.10 | 1.5 | 47790 | 30000.0 | 0.10 | 1.00 | 0.10 | 238.950 |
| Embodiment 16 | 0.6 | 0.40 | 0.10 | 1.5 | 65762 | 30000.0 | 0.13 | 0.50 | 0.25 | 263.048 |
| Embodiment 17 | 2.5 | 2.00 | 0.20 | 1.5 | 65762 | 45000.0 | 0.25 | 2.00 | 0.50 | 438.413 |
| Embodiment 18 | 0.5 | 0.40 | 0.20 | 1.5 | 47790 | 30000.0 | 0.10 | 1.00 | 0.10 | 477.900 |
| Embodiment 19 | 1.5 | 1.00 | 0.30 | 0.3 | 47790 | 45000.0 | 0.10 | 1.00 | 0.10 | 477.900 |
| Embodiment 20 | 2.5 | 2.00 | 0.30 | 0.3 | 47790 | 45000.0 | 0.10 | 1.00 | 0.10 | 477.900 |
| Embodiment 21 | 6.5 | 6.00 | 0.30 | 0.3 | 47790 | 45000.0 | 0.10 | 1.00 | 0.10 | 477.900 |
| Embodiment 22 | 0.5 | 0.30 | 0.40 | 0.75 | 47790 | 30000.0 | 0.05 | 4.00 | 0.20 | 477.900 |
| Embodiment 23 | 7 | 4.00 | 0.10 | 1.5 | 65762 | 30000.0 | 2.00 | 3.00 | 6.00 | 164.405 |
| Embodiment 24 | 0.6 | 0.30 | 0.20 | 1.5 | 65762 | 45000.0 | 0.25 | 1.00 | 0.25 | 526.096 |
| Embodiment 25 | 5 | 0.40 | 0.15 | 0.3 | 47790 | 45000.0 | 0.40 | 1.00 | 0.40 | 549.585 |
| Embodiment 26 | 0.5 | 0.40 | 0.10 | 1.5 | 47790 | 30000.0 | 0.01 | 4.00 | 0.04 | 597.375 |
| Embodiment 27 | 10 | 8.00 | 0.15 | 0.3 | 47790 | 45000.0 | 0.50 | 1.00 | 0.50 | 191.160 |
| Embodiment 28 | 2.5 | 2.00 | 0.20 | 1.5 | 65762 | 45000.0 | 0.25 | 1.00 | 0.25 | 876.827 |
| Embodiment 29 | 5 | 2.00 | 0.15 | 0.3 | 47790 | 45000.0 | 0.20 | 1.00 | 0.20 | 716.850 |
| Embodiment 30 | 0.51 | 0.40 | 0.15 | 0.3 | 47790 | 45000.0 | 0.25 | 2.00 | 0.50 | 10.514 |
| Embodiment 31 | 2.55 | 2.00 | 0.20 | 1.5 | 65762 | 45000.0 | 0.25 | 1.00 | 0.25 | 964.509 |
| Comparative example 1 | 2.5 | 2.00 | 0.10 | 0.2 | 65762 | 45000.0 | 2.00 | 1.00 | 2.00 | 7.307 |
| Comparative example 2 | 0.55 | 0.4 | 0.20 | 0.15 | 47790 | 45000.0 | 0.25 | 2.00 0 | 0.50 | 9.558 |
| Comparative example 3 | 0.5 | 0.2 | 0.50 | 1.20 | 65762 | 45000.0 | 0.25 | 1.00 | 0.25 | 1052.19 |
| Comparative example 4 | 1 | 0.3 | 0.50 | 1.5 | 47790 | 45000.0 | 0.5 | 1.00 | 0.50 | 1115.10 |
| Comparative example 5 | 0.6 | 0.3 | 0.30 | 1.5 | 65762 | 30000.0 | 0.025 | 1.00 | 0.03 | 11837.16 |
| Comparative example 6 | 0.6 | 0.4 | 0.3 | 1000 | 47790 | 45000.0 | 0.25 | 1.00 | 0.25 | 254880.00 |
| Comparative example 7 | 0.5 | 0.3 | 0.1 | 1000 | 47790 | 45000.0 | 0.10 | 1.00 | 0.10 | 212400.00 |

### Test Example 1: Compression Test

The compression test was performed on the cell 2 and the heat-absorbing unit 1 configured in Embodiments 1 to 31 and Comparative examples 1 to 7. Specifically: 1. the battery assembly configured as described above was placed in a compression apparatus, and the compression apparatus is a tensile testing machine;
2. a compressive force was applied to one of the cells 2 by using the compression apparatus, with the force varying from 0 to the value of F₁ recorded in Table 1, and the tensile testing machine generated in real time a compression amount x corresponding to the pressure F₁, providing a compression deformation amount of the skeleton 11;
3. a compression deformation rate of skeleton 11 was obtained and recorded in Table 2; and
4. a status of the heat-absorbing unit 1 was observed and recorded in compression test results in Table 2.

### Test Example 2: Thermal Propagation Test

A nail penetration test was performed on the battery pack configured in Embodiments 1 to 31 and Comparative examples 1 to 7 to test whether thermal propagation occurred after nail penetration triggered thermal runaway in one cell 2 (based on whether thermal runaway occurred in adjacent cells 2). In addition, a maximum temperature of the cell 2 in which the thermal runaway was triggered by the nail penetration was monitored.

Test conditions were as follows:
(1) a state of charge (SOC) was 100%, that is, fully charged;
(2) a sample temperature was 45°C±2°C;
(3) a 5 mm flat steel needle was used to insert into the cell 2 at a speed of 1 mm/s, the insertion was stopped after thermal runaway occurred in the cell 2, and the thermal runaway was determined when a voltage of the cell 2 dropped to 75%;
(4) observation was continued after the experiment until a temperature of the cell 2 fell below 100°C; and
(5) whether the thermal runaway occurred in a cell 2 adjacent to the cell 2 was determined, and when a voltage of the adjacent cell 2 dropped to 75%, it was determined that the thermal runaway occurred, that is, thermal propagation had occurred.

### Test results are shown in Table 2 below.

In addition, Test Example 2 may also be performed based on the apparatus shown in FIG. 8, and when applied to this test apparatus, the internal cell 2 may be added in a form of a battery assembly. The thermal runaway test were performed on the battery assembly.

### Test Example 3

### Volumetric Energy Density Test

The obtained battery pack was subjected to a charging and discharging test to obtain a battery capacity of the battery pack. Volumes of the cell 2 and the heat-absorbing unit 1 were measured and calculated. Volumetric energy density of a single cell 2 and a volumetric energy density reduction rate were obtained by the following formulas: 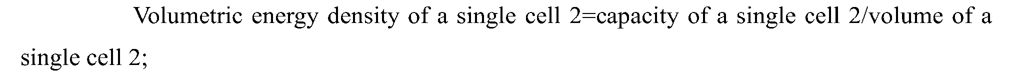 Volumetric energy density of a single cell 2=capacity of a single cell 2/volume of a single cell 2; 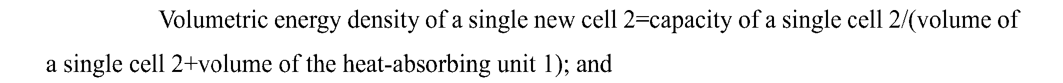 Volumetric energy density of a single new cell 2=capacity of a single cell 2/(volume of a single cell 2+volume of the heat-absorbing unit 1); and 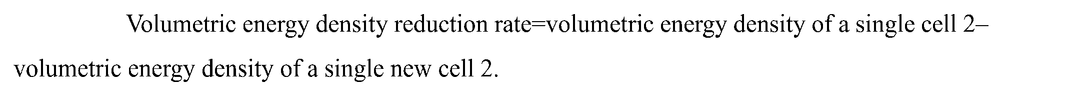 Volumetric energy density reduction rate=volumetric energy density of a single cell 2-volumetric energy density of a single new cell 2.

A method for measuring the volume of the cell 2 and the volume of the heat-absorbing unit 1 are as follows: For a single cell 2 or a heat-absorbing unit 1, the volume of the cell 2 may be obtained by measuring a length, width and height of the cell 2, and the volume of the heat-absorbing unit 1 may be obtained by measuring a length, width and height of the heat-absorbing unit 1.

Battery capacity testing method:
(1) at room temperature, a battery was charged to a cut-off voltage at a small current (for example, 1/3C), and left to stand for 1 hour;
(2) the battery was discharged to the cut-off voltage at a constant current of 1/3C, and left to stand for 1 hour; and
(3) steps 1 and 2 were repeated twice in total, and a discharge capacity of a second cycle was recorded as a battery capacity.

A lithium iron phosphate battery was used in this Test Example, and the cut-off voltage was 3.75 V.

Results are shown in Table 2 below.

**Table 2**

| Embodiment number | Compression deformation rate of the skeleton 11 | Compression test results | Volume of the heat-absorbing material 12 | Volumetric energy density reduction rate of the assembly | Thermal propagation test results |
|---|---|---|---|---|---|
| Embodiment 1 | 0.02092 | Intact | 21027.6 | 2.84% | No thermal propagation occurred |
| Embodiment 2 | 0.00418 | Intact | 20071.8 | 2.84% | No thermal propagation occurred |
| Embodiment 3 | 0.02092 | Intact | 16248.6 | 1.08% | thermal propagation occurs |
| Embodiment 4 | 0.02092 | Intact | 4062.15 | 0.22% | Thermal propagation occurred |
| Embodiment 5 | 0.00304 | Intact | 29592.9 | 2.36% | No thermal propagation occurred |
| Embodiment 6 | 0.01046 | Intact | 21027.6 | 2.84% | No thermal propagation occurred |
| Embodiment 7 | 0.00418 | Intact | 21505.5 | 2.84% | No thermal propagation occurred |
| Embodiment 8 | 0.00418 | Intact | 21983.4 | 2.84% | No thermal propagation occurred |
| Embodiment 9 | 0.02092 | Intact | 44922.6 | 2.84% | No thermal propagation occurred |
| Embodiment 10 | 0.00837 | Intact | 22700.25 | 2.14% | No thermal propagation occurred |
| Embodiment 11 | 0.00304 | Intact | 36169.1 | 2.36% | No thermal propagation occurred |
| Embodiment 12 | 0.01046 | Intact | 22461.3 | 2.14% | No thermal propagation occurred |
| Embodiment 13 | 0.01046 | Intact | 17682.3 | 1.44% | Thermal propagation occurred |
| Embodiment 14 | 0.00304 | Intact | 37484.34 | 2.36% | No thermal propagation occurred |
| Embodiment 15 | 0.00418 | Intact | 23417.1 | 2.84% | No thermal propagation occurred |
| Embodiment 16 | 0.00304 | Intact | 37813.15 | 2.36% | No thermal propagation occurred |
| Embodiment 17 | 0.00228 | Intact | 157828.8 | 10.78% | No thermal propagation occurred |
| Embodiment 18 | 0.00209 | Intact | 22939.2 | 2.84% | No thermal propagation occurred |
| Embodiment 19 | 0.01046 | Intact | 70251.3 | 6.80% | No thermal propagation occurred |
| Embodiment 20 | 0.01046 | Intact | 118041.3 | 12.74% | No thermal propagation occurred |
| Embodiment 21 | 0.01046 | Intact | 309201.3 | 30.46% | No thermal propagation occurred |
| Embodiment 22 | 0.00209 | Intact | 20071.8 | 2.14% | No thermal propagation occurred |
| Embodiment 23 | 0.00304 | Intact | 420876.8 | 19.46% | No thermal propagation occurred |
| Embodiment 24 | 0.00228 | Intact | 36169.1 | 1.78% | No thermal propagation occurred |
| Embodiment 25 | 0.02092 | Intact | 236082.6 | 2.84% | No thermal propagation occurred |
| Embodiment 26 | 0.00418 | Intact | 23703.84 | 2.84% | No thermal propagation occurred |
| Embodiment 27 | 0.02092 | Intact | 474315.75 | 36.87% | No thermal propagation occurred |
| Embodiment 28 | 0.00228 | Intact | 161116.9 | 10.78% | No thermal propagation occurred |
| Embodiment 29 | 0.02092 | Intact | 237516.3 | 12.74% | No thermal propagation occurred |
| Embodiment 30 | 0.02092 | Intact | 20788.65 | 2.84% | No thermal propagation occurred |
| Embodiment 31 | 0.00228 | Intact | 164405 | 10.78% | No thermal propagation occurred |
| Comparative example 1 | 0.03421 | Encapsulation damaged | 151252.6 | 10.78% | Thermal propagation occurred |
| Comparative example 2 | 0.03139 | Encapsulation damaged | 21505.5 | 2.84% | Thermal propagation occurred |
| Comparative example 3 | 0.00114 | Material overflow | 24660.75 | 1.44% | Thermal propagation occurred |
| Comparative example 4 | 0.00126 | Material overflow | 35842.5 | 2.14% | Thermal propagation occurred |
| Comparative example 5 | 0.00101 | Material overflow | 38963.985 | 2.14% | Thermal propagation occurred |
| Comparative example 6 | 0.00000 | Material overflow | 25089.75 | 2.84% | Thermal propagation occurred |
| Comparative example 7 | 0.00001 | Material overflow | 23417.1 | 2.14% | Thermal propagation occurred |

It can be learned from the results in Table 2 that, according to Embodiments 1 to 31, the heat-absorbing unit 1 configured within a parameter range according to the present invention has good mechanical properties. Specifically, the heat-absorbing unit 1 was intact in the compression test of the battery assembly. However, in Comparative examples 1 to 7, when a value of $\frac{1000 \left(x-d\right) {aE}_{1} S}{{nF}_{1} {x}_{1}}$ of the heat-absorbing unit 1 in the battery assembly was less than 10 or greater than 1000, in the compression test of the battery assembly, the heat-absorbing unit 1 exhibited encapsulation damage (an aluminum-plastic film of the heat-absorbing unit 1 was damaged, and a material overflowed or leaked from a damaged region) or material overflow (the material was squeezed out of the gap between the cells 2 due to expansion of the cell 2), resulting in the heat-absorbing unit 1 being unable to absorb heat. It can be learned from Embodiments 3, 4, and 13 that, when battery energy ranged from 537 to 3456 kJ, and the volume of the heat-absorbing unit 1 was less than 20000 mm³, the thermal propagation occurred in the battery. A specific reason is that an amount of the heat-absorbing material 12 in the heat-absorbing unit 1 was insufficient to meet heat release by the battery, resulting in the thermal runaway in the adjacent cell 2. In addition, it can be learned from Embodiments 21 and 27 that, when the battery energy ranged from 537 to 3456 kJ, and the volume of the heat-absorbing unit 1 is greater than 300000 mm³, no thermal propagation occurred in the adjacent cell 2. However, the volumetric energy density reduction rate of the battery assembly exceeded 30%, and the volumetric energy density of the battery assembly was excessively low. Therefore, when the battery energy ranged from 537 to 3456 kJ, and the volume of the heat-absorbing unit 1 is greater than 20000 and less than 300000 mm³, it can be ensured that the heat-absorbing unit 1 has sufficient volume to absorb heat generated by the cell 2 during the thermal runaway, and it can also be ensured that the volumetric energy density reduction rate of the battery assembly remains at a specific level (that is, below 30%), to maintain the volumetric energy density of the battery assembly. In addition, when the thickness of the heat-absorbing unit 1 in the battery assembly is adjusted within a preferred range (for example, 0.1 to 10 mm), it can be ensured that the battery assembly has good safety, and the volumetric energy density reduction rate of the battery assembly is also greatly lower.

The preferred implementations of the present invention is described in detail above. However, the present invention is not limited thereto. Within the scope of the technical concept of the present invention, various simple modifications may be made to the technical solutions of the present invention, including combining the various technical features in any other suitable manner. These simple modifications and combinations shall also be considered as the content disclosed by the present invention and shall all fall within the protection scope of the present invention.

## Claims

1. A battery assembly, wherein the battery assembly comprises:
a plurality of cells (2); and
a heat-absorbing unit (1), the heat-absorbing unit (1) being disposed between two adjacent cells (2), and the heat-absorbing unit (1) comprising:
a heat-absorbing material (12); and
at least one layer of skeleton (11), the skeleton (11) having a plurality of holes (13) penetrating in a thickness direction of the skeleton (11), and the heat-absorbing material (12) filling the hole (13); and
the battery assembly meets the following condition: $10 \leq \frac{1000 \left(x-d\right) {aE}_{1} S}{{nF}_{1} {x}_{1}} \leq 1000$
wherein x is a thickness of the heat-absorbing unit (1), in mm;
d is a gap between two adjacent cells (2), in mm;
a is a ratio of an area of an orthographic projection of the skeleton (11) onto a surface of the heat-absorbing unit (1) in contact with the cell (2) to an area of the surface of the heat-absorbing unit (1) in contact with the cell (2);
E₁ is a Young's modulus of the skeleton (11), in GPa;
S is the area of the surface of the heat-absorbing unit (1) in contact with the cell (2), in mm²;
F₁ is pressure borne by the skeleton (11), in N;
x₁ is a thickness of one layer of the skeleton (11), in mm; and
n is a quantity of layers of the skeleton (11), n≥1, and n is an integer.

2. The battery assembly according to claim 1, wherein energy Q of the cell (2) ranges from 576 to 3456 kJ.

3. The battery assembly according to claim 1 or 2, wherein a volume V of the heat-absorbing material (12) ranges from 20000 to 300000 mm³;
wherein the volume V of the heat-absorbing material (12) satisfies: V=(x-a*n*x₁)S.

4. The battery assembly according to any one of claims 1 to 3, wherein the thickness x of the heat-absorbing unit (1) ranges from 0.5 to 5 mm.

5. The battery assembly according to any one of claims 1 to 4, wherein the gap d between two adjacent cells (2) ranges from 0.3 to 3 mm.

6. The battery assembly according to any one of claims 1 to 5, wherein the ratio a of the area of the orthographic projection of the skeleton (11) onto the surface of the heat-absorbing unit (1) in contact with the cell (2) to the area of the surface of the heat-absorbing unit (1) in contact with the cell (2) ranges from 10% to 50%.

7. The battery assembly according to any one of claims 1 to 6, wherein the Young's modulus E₁ of the skeleton (11) ranges from 0.0001 to 100 GPa.

8. The battery assembly according to any one of claims 1 to 7, wherein the area S of the surface of the heat-absorbing unit (1) in contact with the cell (2) ranges from 5000 to 300000 mm².

9. The battery assembly according to any one of claims 1 to 8, wherein the pressure F₁ borne by the skeleton (11) ranges from 5000 to 60000 N.

10. The battery assembly according to any one of claims 1 to 9, wherein the pressure F₁ borne by the skeleton (11) satisfies the following formula: ${F}_{1} = F \frac{{E}_{1} a}{{E}_{2} \left(1-a\right) + {E}_{1} a}$
wherein F is total pressure borne by the surface of the heat-absorbing unit (1) in contact with the cell (2), in N;
E₂ is a Young's modulus of the heat-absorbing material (12), in GPa; and
a is the ratio of the area of the orthographic projection of the skeleton (11) onto the surface of the heat-absorbing unit (1) in contact with the cell (2) to the area of the surface of the heat-absorbing unit (1) in contact with the cell (2).

11. The battery assembly according to any one of claims 1 to 10, wherein the thickness x₁ of one layer of the skeleton (11) ranges from 0.025 to 2 mm.

12. The battery assembly according to any one of claims 1 to 11, wherein the quantity of layers n of the skeleton (11) ranges from 1 to 10.

13. The battery assembly according to any one of claims 1 to 12, wherein the thickness x of the heat-absorbing unit (1) is greater than or equal to a product of the thickness x₁ of one layer of the skeleton (11) and the quantity of layers n of the skeleton (11).

14. The battery assembly according to any one of claims 1 to 13, wherein a total thickness of the skeleton (11) accounts for 1% to 100% of the thickness of the heat-absorbing unit (1), preferably 10% to 80%.

15. The battery assembly according to any one of claims 1 to 14, wherein the heat-absorbing unit (1) further comprises an encapsulation film (14) for encapsulating the skeleton (11) and the heat-absorbing material (12).

16. The battery assembly according to any one of claims 1 to 15, wherein the holes (13) are evenly disposed in the thickness direction of the skeleton (11).

17. The battery assembly according to any one of claims 1 to 16, wherein a ratio of the area of the surface of the heat-absorbing unit (1) in contact with the cell (2) to an area of a surface of the cell (2) in contact with the heat-absorbing unit (1) is greater than or equal to 0.8 and less than or equal to 1.

18. The battery assembly according to any one of claims 1 to 17, wherein the battery assembly comprises at least two cell groups, the cell group comprises N cells (2) that are arranged, and the heat-absorbing unit (1) is disposed between two adjacent cell groups, wherein the thickness x of the heat-absorbing unit (1) meets the following relationship:
(0.5N±b)mm≤x≤(5N±b)mm, wherein b is a preset correction factor in mm.

19. The battery assembly according to any one of claims 1 to 18, wherein a phase change temperature of the heat-absorbing material (12) is between 50°C and 200°C.

20. The battery assembly according to claim 19, wherein the phase change temperature of the heat-absorbing material (12) is between 70°C and 160°C.

21. The battery assembly according to any one of claims 1 to 20, wherein the heat-absorbing material (12) is a hydrogel.

22. The battery assembly according to any one of claims 1 to 21, wherein the plurality of holes (13) are evenly disposed in an extension direction of the skeleton (11).

23. A power consumption system, comprising the battery assembly according to any one of claims 1 to 22.
